# EUROPÄISCHE PATENTANMELDUNG

(11) **EP 0 922 566 A2**
(43) Veröffentlichungstag der Anmeldung: **16.06.1999**
(21) Anmeldenummer: 98123149.1
(22) Anmeldetag: 04.12.1998
(51) Int. Cl.: B32B 25/08

(54) **Selbstklebende Dichtungsbahnen**

(30) Priorität: 13.12.1997 DE 19755422
(71) Anmelder: Henkel KGaA, 40589 Düsseldorf (DE)
(72) Erfinder: Benkhoff, Hermann, Dipl.-Ing., 63571 Gelnhausen (DE); Simonis, Udo, Dr., 63549 Ronneburg (DE)

(57) **Zusammenfassung**

Vorgeschlagen werden selbstklebende Dichtungsbahnen, die man erhält, indem man
(a) Butylkautschuk zu einem Film formt,
(b) die Unterseite des Filmes mit einer thermoplastischen Folie und
(c) die Oberseite mit einer siliconisierten Schutzfolie beschichtet.

## Beschreibung

### Gebiet der Erfindung

Die Erfindung betrifft selbstklebende Dichtungsbahnen, die man durch Kaschieren von Butylkautschukfilmen mit Thermoplasten und Schutzfolien erhält, ein Verfahren zu ihrer Herstellung sowie die Verwendung von Butylkautschuk als Klebstoff zur Herstellung der Dichtungsbahnen.

### Stand der Technik

Ebene Flächen auf Gebäuden werden gegen das Eindringen von Feuchtigkeit oder Chemikalien üblicherweise durch Dichtungsbahnen aus diversen Kunststoffen abgesichert. Streicht Wind über die Flächen kann sich je nach baulichen Gegebenheiten ein Untendruck bilden, was dazu führt, daß die Dichtungsbahn vom Untergrund abgehoben wird. In der Folge kann es zu Unebenheiten und zu Verwerfungen in den Bahnen kommen, die absolut unerwünscht sind. Aus diesem Grunde werden die Dichtungsbahnen in der Regel an den Randstellen mit dem Untergrund verschraubt und überlappend verlegt. Dieses Verfahren ist ausgesprochen arbeitsaufwendig und daher wenig wirtschaftlich, zumal üblicherweise glasfaserbeschichtete Dachbahnen verlegt werden müssen, um zu verhindern, daß das Material an den Verschraubungsstellen ausreist. Eine Alternative hierzu bietet die lose Verlegung der Bahnen, die dann mit Kies oder eine Begrünung ausreichend beschwert werden. Eine solche Möglichkeit bietet sich indes nicht immer. Demzufolge besteht die einzige sichere und in der Anwendung rationelle Alternative darin, die Bahnen flächig zu verkleben. Werden Dichtungsbahnen aus PVC eingesetzt, zumal solche, die an der Unterseite eine Kunsstofffleace besitzen, ist damit keine Schwierigkeit verbunden, da es für PVC wegen seiner hohen Polarität eine ausreichende Anzahl von unterschiedlichen Klebstoffen gibt. Des weiteren befinden sich im Markt auch selbstklebende PVC-Dichtungsbahnen, also PVC-Folien, die mit einem Klebstoff beschichtet sind und deren klebende Oberfläche durch eine abziehbare Schutzfolie gesichert ist. Dichtungsbahnen aus PVC weisen jedoch zwei Nachteile auf: Zum einen entsteht bei ihrem Verbrennen HCI, was aus ökologischen Gründen problematisch ist, zum anderen migrieren die in ihnen enthaltenen Weichmacher im Laufe der Zeit an die Oberfläche und werden abgespült; dies führt dazu, daß die Folie ihre Elastizität verliert und brüchig werden kann.

Aus den genannten Gründen werden von Kunden daher häufig Dachbahnen auf Basis anderer Kunststoffe verlangt. Alternative Dichtungsbahnen bestehen beispielsweise aus sogenannten 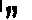 thermoplastischen bzw. flexiblen Olefinen" (TPO bzw. FPO), zu denen Ethylen-Propylen-Copolymere oder Ethylenvinylacetat-Homopolymere gehören. Entsprechende Dichtungsbahnen sind beispielsweise aus den Druckschriften **EP-A 0428851** und **EP-A 0677624** (Sarna) bekannt. Da die TPO/FPO eine deutlich unpolarere Oberfläche besitzen, ist die flächige Verklebung deutlich schwerer als im Fall der PVC-Dichtungsbahnen zu gewährleisten. Bislang ungelöst ist das Problem, selbstklebende TPO/FPO-Dichtungsbahnen herzustellen, da es an einem geeigneten Klebstoff fehlt, der eine dauerhafte, witterungsbeständige und vom Untergrund unabhängige flächige Verklebung gewährleistet. Die Aufgabe der Erfindung hat daher darin bestanden, derartige Dichtungsbahnen erstmals zur Verfügung zu stellen.

### Beschreibung der Erfindung

Gegenstand der Erfindung sind selbstklebende Dichtungsbahnen, die man erhält, indem man
(a) Butylkautschuk zu einem Film formt,
(b) die Unterseite des Filmes mit einer thermoplastischen Folie und
(c) die Oberseite mit einer siliconisierten Schutzfolie beschichtet.

Überraschenderweise wurde gefunden, daß unter Einsatz von Butylkautschuk als Klebstoffkomponente auch TPO/FPO-Dichtungsbahnen in solcher Weise selbstklebend beschichtet werden können, daß eine leichte vollflächige Verlegung und eine dauerhafte Haftung auf unterschiedlichsten Untergründen auch bei wechselnder Bewitterung gewährleistet ist.

Ein weiterer Gegenstand der Erfindung betrifft ein Verfahren zur Herstellung von selbstklebenden Dichtungsbahnen, bei dem man
(a) Butylkautschuk zu einem Film formt,
(b) die Unterseite des Filmes mit einer thermoplastischen Folie und
(c) die Oberseite mit einer siliconisierten Schutzfolie beschichtet.

### Butylkautschukfilme

Als Butylkautschuk (IIR) bezeichnet der Fachmann Copolymere von Isobutylen mit etwa 0,5 bis 5 Gew.-% Isopren, die durch kationische Polymerisation der beiden Monomeren bei Temperaturen im Bereich von -40 bis -100°C im Lösemittelverfahren (Solvens: Hexan) oder Fällungsverfahren (Solvens: Methylchlorid) hergestellt werden. Butylkautschuk enthält über das in trans-1,4-Konfiguration eingebaute Isopren Doppelbindungen als reaktive Zentren, über die die Verklebung erfolgen kann. Zur Herstellung der Filme, kann man den Butylkautschuk entweder durch eine Breitschlitzdüse extrudieren oder in an sich bekannter Weise kalandrieren. Die Filme können dabei eine Stärke von 50 bis 1.500 µm aufweisen.

### Thermoplastische Folien

Unter Thermoplasten oder Plastomeren werden gemäß DIN 7724 polymere, bei Gebrauchstemperatur weiche oder harte Werkstoffe verstanden, die oberhalb dieser Temperatur einen Fließübergangsbereich besitzen. Typische Beispiele für thermoplastische Kunststoffe, die im Sinne der Erfindung als Folienmaterial in Betracht kommen, sind thermoplastische bzw. flexible Polyolefine (TPO/FPO) wie etwa die Homo- oder Copolymere von Ethylen, Propylen, Butylen und Vinylacetat. Vorzugsweise setzt man thermoplastische Folien auf Basis von Polymeren ein, die metallocen-katalysiert hergestellt worden sind. Andere geeignete Thermoplasten sind Polyamide, Polyester, Polyacetate, Polycarbonate sowie z.T. auch Polyurethane. Die Herstellung der thermoplastischen Folien kann in an sich bekannter Weise, d.h. durch Kalandrieren oder Extrusion durch eine Breitspritzdüse erfolgen. Die Folien können dabei eine Stärke von 100 bis 3.000, vorzugsweise 400 bis 1.500 µm aufweisen.

### Beschichtung

Zur Herstellung der selbstklebenden Dichtungsbahnen wird zunächst Butylkautschuk beispielsweise durch Extrusion durch eine Breitspritzdüse zu einem Film verarbeitet. Der Film läuft durch einen oder mehrere Trockenschränke und wird auf die Verarbeitungstemperatur erwärmt, die üblicherweise im Bereich von 160 bis 220°C liegt. Anschließend gelangt der heiße Film in einen ersten Kaschierspalt, wo die Oberseite zunächst mit der thermoplastischen Folie beschichtet wird, ehe man im zweiten Spalt die Unterseite mit einer siliconisierten Schutzfolie kaschiert. In einer bevorzugten Ausführungsform der Erfindung führt man die Kaschierung mit thermoplastischer Folie und Schutzfolie gleichzeitig in einem Kaschierspalt durch. Falls gewünscht, kann weiterhin zur Stabilisierung der Dichtungsbahn zwischen thermoplastischer Folie und Butylkautschukschicht eine Gewebe- oder Glasfasermatte einkaschiert werden.

### Gewerbliche Anwendung

Ein weiterer Gegenstand der Erfindung betrifft die Verwendung von Butylkautschuk als Klebstoff für die Herstellung von selbstklebenden Dichtungsbahnen, vorzugsweise solchen auf Basis thermoplastischer Polymere. Die Erfindung schließt die Erkenntnis ein, daß Butylkautschuk auch in der Lage ist, PVC oder Elastomere zu verkleben.

### Beispiele

**Beispiel 1, Vergleichsbeispiele V1 bis V3.** TPO-Folie mit einer Stärke von 450 µm (Inofin®, Fa.Grünau/Illertissen) wurde in einem Kaschierspalt mit verschiedenen Klebematerialien (Filmstärke: 1.000 µm) beschichtet. Anschließend wurden die Folien auf Flächen von etwa 1.000 mm * 2.000 mm abgelängt und auf verschiedenen Untergründen flächig verlegt. Die Flächen wurden 24 h bei Temperaturen im Bereich von 20 bis 80°C bewittert und dann die Bodenhaftung subjektiv beurteilt. Dabei bedeutet (+++) sehr gute Haftung, (++) praktisch keine Ablösung, (+) stellenweise Ablösung und (-) weitgehende Ablösung. Die Ergebnisse sind in Tabelle 1 zusammengefaßt. Beispiel 1 ist erfindungsgemäß, die Beispiele V1 bis V3 dienen zum Vergleich.

**Tabelle 1**

| **Bodenhaftung von selbstklebenden Inofin®-Dichtungsbahnen mit verschiedenen Klebefilmen** | | | | | | | |
|---|---|---|---|---|---|---|---|
| **Bsp.** | **Klebefilm** | **Untergrund:** | | **Beton** | **Untergrund: verzinktes Stahlblech** | | |
| | | T = 20°C | T = 50°C | T = 80°C | T = 20°C | T = 50°C | T = 80°C |
| 1 | Resy T 1310 ¹⁾ | +++ | +++ | ++ | +++ | +++ | ++ |
| V1 | KSK ²⁾ | + | - | - | + | - | - |
| V2 | LM 40/1 ³⁾ | + | - | - | ++ | - | - |
| V3 | R 101 B ⁴⁾ | + | - | - | ++ | - | - |

| | | | | | | | |
|---|---|---|---|---|---|---|---|
| 1) Butylkautschuk Fa.Olin, Corbas/FR | | | | | | | |
| 2) kaltselbstklebender Bitumenkleber mit SBS, Fa.CWW, Frankfurt/DE) | | | | | | | |
| 3) Polyvinylether/Kunstharz-Dispersion, Fa.Grünau, Illertissen/DE) | | | | | | | |
| 4) Polyvinylether/Kunstharz-Dispersion, Fa.Grünau, Illertissen/DE) | | | | | | | |

## Patentansprüche

1. Selbstklebende Dichtungsbahnen, dadurch erhältlich, daß man
(a) Butylkautschuk zu einem Film formt,
(b) die Unterseite des Filmes mit einer thermoplastischen Folie und
(c) die Oberseite mit einer siliconisierten Schutzfolie beschichtet.

2. Verfahren zur Herstellung von selbstklebenden Dichtungsbahnen, bei dem man
(a) Butylkautschuk zu einem Film formt,
(b) die Unterseite des Filmes mit einer thermoplastischen Folie und
(c) die Oberseite mit einer siliconisierten Schutzfolie beschichtet.

3. Verfahren nach Anspruch 2, **dadurch gekennzeichnet,** daß man Butylkautschuk extrudiert und mit Hilfe einer Breitschlitzdüse zu einem Film formt.

4. Verfahren nach Anspruch 2, **dadurch gekennzeichnet,** daß man Butylkautschuk kalandriert und zu einem Film formt.

5. Verfahren nach den Ansprüchen 1 bis 4, **dadurch gekennzeichnet,** daß man thermoplastische Folien einsetzt, die Homo- oder Copolymere von Ethylen, Propylen, Butylen und Vinylacetat darstellen.

6. Verfahren nach den Ansprüchen 1 bis 5, **dadurch gekennzeichnet,** daß man thermoplastische Folien auf Basis von Polymeren einsetzt, die metallocen-katalysiert hergestellt worden sind.

7. Verfahren nach den Ansprüchen 1 bis 6, **dadurch gekennzeichnet,** daß man den Butylkautschukfilm in einem Kaschierspalt beschichtet.

8. Verfahren nach den Ansprüchen 1 bis 7, **dadurch gekennzeichnet,** daß man den Butylkautschukfilm gleichzeitig mit der thermoplastischen Folie und der Schutzfolie beschichtet.

9. Verwendung von Butylkautschuk als Klebstoff für die Herstellung von selbstklebenden Dichtungsbahnen.

10. Verwendung nach Anspruch 9, **dadurch gekennzeichnet,** daß man selbstklebende Dichtungsbahnen auf Basis thermoplastischer Polymere herstellt.
